# EUROPÄISCHE PATENTSCHRIFT

(11) **EP 1 704 347 B1**
(45) Veröffentlichungstag und Bekanntmachung des Hinweises auf die Patenterteilung: **08.12.2010**
(21) Anmeldenummer: 05700713.0
(22) Anmeldetag: 06.01.2005
(51) Int. Cl.: F16H 3/00, F16H 3/093

(54) **DOPPELKUPPLUNGSGETRIEBE FÜR EIN KRAFTFAHRZEUG**
TWIN CLUTCH TRANSMISSION FOR A MOTOR VEHICLE
TRANSMISSION A DOUBLE EMBRAYAGE POUR VEHICULE A MOTEUR

(30) Priorität: 07.01.2004 DE 102004001278
(43) Veröffentlichungstag der Anmeldung: 27.09.2006
(73) Patentinhaber: Volkswagen Aktiengesellschaft, 38436 Wolfsburg (DE)
(72) Erfinder: SCHÄFER, Michael, 38518 Gifhorn (DE); SCHREIBER, Wolfgang, 38550 Isenbüttel (DE); BLUMENSTEIN, Fritz, 38448 Wolfsburg (DE)
(74) Vertreter: Hübsch, Dirk
(86) Internationale Anmeldenummer: PCT/EP2005/000051
(87) Internationale Veröffentlichungsnummer: WO 2005/068876

(56) Entgegenhaltungen:
- EP-A- 0 733 825
- WO-A-03/038304
- DE-A1- 10 119 748
- DE-A1- 10 223 226
- US-A- 5 906 132

## Beschreibung

Die Erfindung betrifft ein Doppelkupplungsgetriebe für ein Kraftfahrzeug nach dem Oberbegriff der Patentanspruchs 1.

Im Stand der Technik sind unterschiedliche Kraftfahrzeuggetriebe, insbesondere Doppelkupplungsgetriebe für Kraftfahrzeuge bekannt. So wird in der DE 101 19 748 A1 ein Doppelkupplungsgetriebe beschrieben, das zwei Eingangswellen aufweist, die jeweils mit einer ersten bzw. zweiten Kupplung verbindbar sind. Es sind zusätzlich zu den beiden Eingangswellen zwei Triebwellen jeweils oberhalb und unterhalb der Eingangswellen vorgesehen, die über auf den Triebwellen angeordnete Antriebs-Zahnräder die Drehkraft auf den Achsantrieb übertragen. Zur Realisierung des Rückwärtsganges ist eine weitere Welle vorgesehen, die oberhalb der zweiten Triebwelle angeordnet ist. Hierbei wird der Rückwärtsgang so realisiert, dass - im Endeffekt - die Drehkraft von der ersten Eingangswelle auf die Welle für den Rückwärtsgang über eine entsprechende Zahnrad-Paarung übertragen wird und von hier aus dann über das Rüdcwärtsgang-Zahnrad auf die zweite Triebwelle übertragen wird, von wo die Drehkraft dann auf den Achsantrieb über das Antriebs-Zahnrad dieser Triebwelle wirkt.

Weiterhin ist im Stand der Technik ein Doppelkupplungsgetriebe bekannt (DE 102 23 226 A1), bei dem ebenfalls zwei Eingangswellen und zwei separate oberhalb bzw. unterhalb der Eingangswellen gelagerte Triebwellen vorgesehen sind. Über die Antriebs-Zahnräder der Triebwellen wird das Antriebsrad des Achsantriebes angetrieben. Für die Realisierung des Rückwärtsganges ist eine weitere separate Welle innerhalb des Getriebes vorgesehen, die mit der zweiten Eingangswelle über ein entsprechendes Zahnrad drehend wirksam verbindbar ist, wobei die Drehkraft-Umkehr dann auf eine Triebwelle übertragen wird und von dem Antriebs-Zahnrad dieser Triebwelle auf den Achsantrieb übertragen wird.

Schließlich ist im gattungsgemäßen Stand der Technik ein Doppelkupplungsgetriebe bekannt (EP 1 077 336 A1), das zwei Eingangswellen, zwei Kupplungen sowie eine erste und zweite Triebwelle aufweist. Zur Realisierung des Rückwärtsganges ist eine weitere Welle vorgesehen, wobei zur Realisierung des Rückwärtsganges das Abtriebszahnrad der dritten Gangstufe zweistufig ausgebildet ist und eine Stufe mit dem Zahnrad für den Rückwärtsgang in Eingriff steht.

Insbesondere auf Grund der Realisierung des Rückwärtsganges bei den bekannten Doppelkupplungsgetrieben, die teilweise über eine weitere zwischen den Triebwellen gelagerte Welle realisiert werden, ist die Flexibilität bzw. Bauweise der bekannten Doppelkupplungsgetriebe stark eingeschränkt. Auch eine kompakte Bauweise, insbesondere in axialer Richtung wird dadurch verhindert.

Der Erfindung liegt daher die Aufgabe zugrunde, dass eingangs genannte Doppelkupplungsgetriebe derart auszugestalten und weiterzubilden, dass ein flexibler Einsatz ermöglicht und insbesondere eine kompakte Bauweise realisiert ist.

Die zuvor aufgezeigte Aufgabe wird nun durch die Merkmale des Kennzeichnungsteiles des Patentanspruchs 1 gelöst. Durch diese Art und Weise der Realisierung des Rückwärtsganges ist nunmehr für ein Doppelkupplungsgetriebe ein Getriebe der "Vier-Wellen-Bauart" realisiert. Hierdurch bedingt ist das Doppelkupplungsgetriebe kompakter baubar, insbesondere die axialen Abmessungen reduzierbar. Schließlich ist für ein derartiges Doppelkupptungsgetriebe eine höhere Flexibilität und damit auch eine höhere Flexibilität für den Einsatz eines derartigen Doppelkupplungsgetriebes geschaffen, da insbesondere nunmehr das erfindungsgemäße Doppelkupplungsgetriebe auch eine zusätzliche siebte Gangstufe (sieben Vorwärtsgänge) aufweist. Es ist daher ein Doppelkupplungsgetriebe mit sieben Gangstufen realisierbar, also mit einer sehr hohen Gangzahl, die keine negative Auswirkung auf die axiale Länge des Doppelkupplungsgetriebes hat, insbesondere bei Kraftfahrzeugen mit quer zur Fahrtrichtung angeordneten Antriebsaggregat. Es ist damit die Möglichkeit geschaffen ein kompaktes "Sieben-Gang-Getriebe" in den vorhanden zwischen den Längsträgem serienmäßigen Bauraum eines Kraftfahrzeuges entsprechend einsetzen zu können. Es ist daher eine erfindungsgemäße Konstruktion geschaffen, bei der ein "Sieben-Gang-Doppelkupplungsgetriebe" in einer Mehrwellen-Bauweise durch die besonders abgestimmte Lage bzw. Anordnung der Eingangswellen, der Triebwellen, insbesondere aber der dritten Triebwelle und durch die Anordnung der entsprechenden Zahnräder der einzelnen Gangstufen in sehr kompakter Weise realisierbar ist. Im Ergebnis sind die eingangs beschriebenen Nachteile vermieden.

Es gibt nun eine Vieizahl von Möglichkeiten das erfindungsgemäße Doppelkupplungsgetriebe auf vorteilhafte Art und Weise auszugestalten und weiterzubilden. Hierfür darf zunächst auf die dem Patentanspruch 1 nachgeordneten Patentansprüche verwiesen werden. Im Folgenden soll nun eine bevorzugte Ausführungsform eines Doppelkupplungsgetriebes anhand der nachfolgenden Zeichnung und der dazugehörenden Beschreibung näher erläutert wenden. In der Zeichnung zeigt
- Fig. 1: ein schematische Darstellung der wesentlichen Komponenten des erfindungsgemäßen Doppelkupplungsgetriebes und
- Fig. 2: eine schematische Darstellung der Anordnung / Positionierung der einzelnen Wellen des in Fig. 1 dargestellten erfindungsgemäßen Doppelkupplungsge- triebes von der Seite.

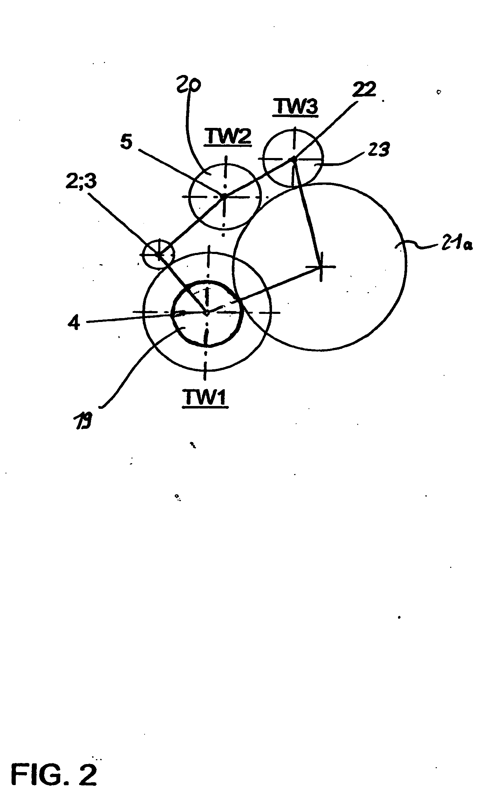

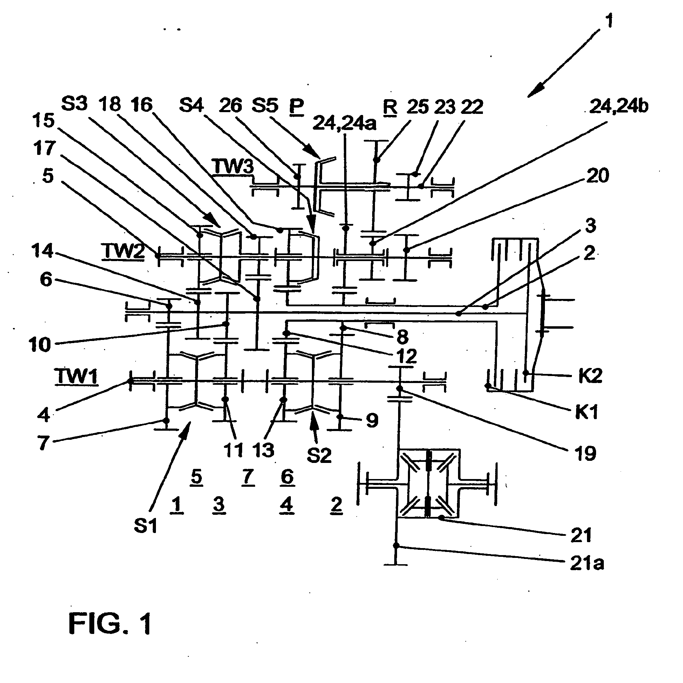

Die Fig. 1 und 2 zeigen zu mindestens teilweise ein Doppelkupplungsgetriebe 1 für ein hier nicht näher dargestelltes Kraftfahrzeug. Das Doppelkupplungstriebe 1 weist zwei Eingangswellen 2 und 3, zwei Kupplungen K1 und K2 und eine erste und zweite Triebwelle 4 und 5 auf. Die erste Eingangswelle 2 ist mit der ersten Kupplung K1 wirksam verbindbar, wobei die zweite Eingangswelle 3 mit der zweiten Kupplung K2 wirksam verbindbar ist. Die erste Triebwelle 4 ist hier vorzugsweise unterhalb der Eingangswellen 2 und 3 eingeordnet, wobei die zweite Triebwelle 5 oberhalb der Eingangswelle 2 und 3 angeordnet ist. Dies kann aber auch umgekehrt der Fall sein. Die Eingangswellen 2 und 3 und die Triebwellen 4 und 5 weisen miteinander in Eingriff stehende Zahnräder 6 bis 18 auf. Zumindest zwei Zahnräder bilden jeweils eine Gangstufe, was im folgenden noch ausführlicher erläutert werden wird. Hierbei ist mindestens ein Zahnrad einer Gangstufe als ein- und/oder auskuppelbares Losrad und das andere Zahnrad vorzugsweise als Festrad ausgebildet. Jede Triebwelle 4 und 5 weist ein Antriebs-Zahnrad 19 und 20 zur Übertragung von Drehkraft auf den Achsantrieb 21 auf. Zur Realisierung des Rückwärtsganges RG ist eine weitere Welle (22) vorgesehen.

Die weitere Welle (22) ist nun als dritte Triebwelle 22 ausgebildet ist, wobei die dritte Triebwelle 22 ein Antriebs-Zahnrad 23 zur Übertragung von Drehkraft auf den Achsantrieb 21 aufweist, und wobei die Antriebs-Zahnräder 19, 20 und 23 der Triebwellen 4, 5 und 22 mit einem Achsantriebsrad 21a des Achsantriebes 21 in Eingriff stehen. Vorzugsweise liegen die Antriebs-Zahnräder 19, 20 und 23 der Triebwellen 4, 5 und 22 in ein und der gleichen Ebene, nämlich in der Ebene des Achsantriebsrades 21a. Durch die Ausbildung der weiteren Welle als dritte Triebwelle 22 zur Realisierung des Rückwärtsganges RG kann ein in axialer Richtung sehr kompakt gebautes Doppelkupplungsgetriebe 1 hergestellt werden. Es ist nun nicht mehr notwendig - wie bisher im Stand der Technik üblich - die weitere Welle im Bereich zwischen der ersten Triebwelle 4 und der zweiten Triebwelle 5 vorzusehen. Es ist hiermit das Doppelkupplungsgetriebe 1 als ein Getriebe der "Vier-Wellen-Bauart" ausgebildet.

Bevor im folgenden auf die weiter bevorzugte Ausführungsform des Doppelkupplungsgetriebes 1 näher eingegangen wird darf zunächst folgendes ausgeführt werden: Die einzelnen Gangstufen des Doppelkupplungsgetriebes 1 werden nun durch die folgenden Zahnräder wie folgt gebildet Die erste Gangstufe wird durch die Zahnräder 6 und 7, die zweite Gangstufe durch die Zahnräder 8 und 9, die dritte Gangstuffe durch die Zahnräder 10 und 11, die vierte Gangstufe durch die Zahnräder 12 und 13, die fünfte Gangstufe durch die Zahnräder 14 und 15 sowie die sechste Gangstufe durch die Zahnräder 12 und 16 gebildet. Das erfindungsgemäße Doppelkupplungsgetriebe 1 hat hier eine zusätzliche siebte Gangstufe, die durch die Zahnräder 17 und 18 gebildet wird.

Die Fig. 1 zeigt, dass die erste Eingangswelle 2 als Hohlwelle ausgebildet ist und die zweite Eingangswelle 3 als in der als Hohlwelle ausgebildeten ersten Eingangswelle 2 im wesentlichen angeordnete Vollwelle ausgeführt ist.

Die auf der ersten Eingangswelle 2 angeordneten Zahnräder für die zweite, vierte und sechste Gangstufe, also die Zahnräder 8 und 12 sind vorzugsweise als Festräder ausgebildet, d. h. eben nicht ein- bzw. auskuppelbar. Hierbei ist das auf der ersten Eingangswelle 2 angeordnete Zahnrad 12 für die vierte und sechste Gangstufe angeordnet. Anders ausgedruckt die vierte und sechste Gangstufe haben ein gemeinsames Zahnrad 12.

Auf der zweiten Eingangswelle 3 sind die Zahnräder 6, 10 und 14 für die erste, dritte und fünfte Gangstufe angeordnet. Hierbei ist auf der zweiten Eingangswelle 3 zusätzlich ein Zahnrad 17 für eine siebte Gangstufe angeordnet. Hierbei sind die Zahnräder 6, 10, 14 und 17 der zweiten Eingangswelle 3 vorzugsweise als Festräder ausgebildet.

Auf der ersten Triebwelle 4 sind die Zahnräder 7, 9, 11 und 13 für die erste, die zweite, die dritte und die vierte Gangstufe angeordnet. Hierbei sind diese Zahnräder 7, 9, 11 und 13 vorzugsweise als Losräder ausgebildet.

Auf der zweiten Triebwelle 5 sind die Zahnräder 15, 16 und 18 für die fünfte, sechste und siebte Gangstufe angeordnet. Hierbei sind diese Zahnräder 15, 16 und 18 der zweiten Triebwelle 5 vzw. als Losräder ausgebildet. Auf der zweiten Triebwelle 5 ist ein Zwischenrad 24 als Losrad ausgebildet bzw. angeordnet. Hierbei ist dieses Zwischenrad 24 stufenartig ausgebildet und weist zwei unterschiedliche Übersetzungsstufen 24a und 24b auf.

Auf der dritten Triebwelle 22 ist das Zahnrad 25 für den Rückwärtsgang RG und/oder ein Parksperrad 26 angeordnet. Das Zahnrad 25 für den Rückwärtsgang RG ist hier vorzugsweise als Losrad ausgebildet. Zur Realisierung des Rückwärtsganges RG steht das Zahnrad 8 der zweiten Gangstufe der ersten Eingangswelle 2 auch mit dem Zwischenrad 24, insbesondere der Übersetzungsstufe 24a, der zweiten Triebwelle 5 in Eingriff. Weiterhin steht die andere Übersetzungsstufe 24b des Zwischenrades 24 mit dem Zahnrad 25 in Eingriff.

Zum Ein- und / oder Auskuppeln der als Losräder ausgebildeten Zahnräder sind mehrere Synchroneinrichtungen S1 bis S5 vorgesehen. Die erste Synchroneinrichtung S1 ist zwischen den Zahnrädern 7 und 11 der ersten und dritten Gangstufe der ersten Triebwelle 4 angeordnet. Die zweite Synchroneinrichtung S2 ist zwischen den Zahnrädern 9 und 13 der zweiten und vierten Gangstufe der ersten Triebwelle 4 angeordnet. Die dritte Synchroneinrichtung S3 ist zwischen den Zahnrädern 15 und 18 der fünften und siebten Gangstufe der zweiten Triebwelle 5 angeordnet. Die vierte Synchroneinrichtung S4 ist im Bereich des Zahnrades 16 der sechsten Gangstufe der zweiten Triebwelle 5 angeordnet. Schließlich ist die fünfte Synchroneinrichtung S5 im Bereich des Zahnrades 25 für den Rückwärtsgang RG auf der dritten Triebwelle 22 angeordnet.

Die vierte und die fünfte Synchroneinrichtung S4 und S5 sind "gegenläufig" angeordnet, so dass diese mit einer gemeinsamen Betätigung schaltbar sind. Dies ist deutlich aus der Fig. 1 ersichtlich, da die entsprechenden Synchroneinrichtungen S4 und S5 nahezu "in einer Ebene liegen".

Durch die Ausbildung der weiteren Welle für die Realisierung des Rückwärtsganges als dritte Triebwelle 22 kann die axiale Baulänge des Doppelkupplungsgetriebes 1 verkürzt werden und dennoch die Flexibilität des Doppelkupplungsgetriebes 1 erhöht werden, insbesondere ein weiterer Gang, nämlich eine siebte Gangstufe vorgesehen werden, die nun innerhalb des zur Verfügung stehenden Raumes, vorzugsweise hier zwischen den Zahnrädern der dritten und sechsten Gangstufe gelegen, entsprechend realisiert wird. Es ist hier durch die entsprechend abgestimmte Lage / Positionierung der einzelnen Wellen und die Anordnung der einzelnen Zahnräder ein sehr kompakt gebautes Doppelkupplungsgetriebes 1 realisiert, wobei gleichzeitig hohe Variationsmöglichkeiten für Gangabstufungen und damit eine optimale Spreizung abstimmbarer Fahrleistungen gewährleistet ist, insbesondere auch durch die Ausbildung des Zwischenrades 24 mit den beiden Übersetzungsstufen 24a und 24b. Insbesondere weist das hier dargestellte erfindungsgemäße Doppelkupplungsgetriebe 1 insgesamt sieben Vorwärtsgänge, also insgesamt sieben Gangstufen und einen Rückwärtsgang RG auf. Hierbei ist die dritte Triebwelle 22 oberhalb der zweiten Triebwelle 5 angeordnet. Durch die entsprechende Anordnung / Aufteilung der Gangstufen, insbesondere auch dadurch das bspw. die vierte und sechste Gangstufe ein gemeinsames Zahnrad 12 aufweisen kann sehr viel Bauraum eingespart werden.

Alle Verzahnungen der drei Triebwellen 4, 5 und 22 sind zum Achsantriebsrad 21a aufeinander abgestimmt.

Der Rückwärtsgang RG ist hier der Kupplung K1, die wirksam mit der ersten Eingangswelle 2 verbindbar ist, zugeordnet. Vorzugsweise sind die erste und zweite Eingangswelle 2 und 3 jeweils mit einer axial unabhängigen Fest-Loslagerung gelagert. Hierbei sind die Festlager vorzugsweise als Rillenkugeilager ausgeführt, wobei jedes Festlager jeweils einem Gehäuseteil zugeordnet ist. Vorzugsweise ist die zweite Eingangswelle 3 mit einer koaxialen Bohrung mit einem entsprechenden radialen Abzweig zur Schmierung des Radialwellendichtringes zwischen beiden Eingangswellen 2 und 3 versehen. Vorzugsweise ist die Schaltstange für die sechste Gangstufe bzw. für den Rückwärtsgang gleichzeitig als Sperrklinkenlagerung für die Parksperre ausgeführt und wirkt mit dem Parksperrrad 26 zusammen. Schließlich ist das Zahnrad 25 zur Realisierung des Rückwärtsganges RG, nicht nur vorzugsweise als Losrad ausgeführt und auf der dritten Triebwelle 22 gelagert, sondern auch mit einer Freimachung zwischen dem Zahnradkörper und dem Kupplungskörper der Synchroneinrichtung S5 ausgebildet, damit eine optimale Auslegung des Zwischenrades 24 auf der zweiten Triebwelle 5 erfolgen kann.

Vzw. sind die Achsabstände zwischen den "Antriebswellen", also zwischen der ersten bzw. zweiten Eingangswelle 2 bzw. 3 zu den einzelnen Triebwellen, nämlich insbesondere zur ersten und zweiten Triebwelle 4 und 5 so zueinander dimensioniert, dass die Schiebemuffe der Synchroneinrichtung S2 bei eingelegter zweiter Gangstufe unter die Stimradverzahnung des Zahnrades 9 der zweiten Gangstufe verschoben werden kann, anders ausgedrückt, hier "eintauchen" kann. Hierbei wird unter dem Wort "eintauchen" eine zumindest teilweise radiale Überlappung bzw. Verdeckung der Schiebemuffe der Synchroneinrichtung S2 durch die Stirnradverzahnung des Zahnrades 9 verstanden. Ähnliches gilt auch für die Schiebemuffe der Synchroneinrichtung S4 für die sechste Gangstufe, die bei eingelegtem Rückwärtsgang unter die Stimradverzahnung des Zwischenrades 24a entsprechend eintauchen kann. Weiterhin weist das auf der dritten Triebwelle 22 angeordnete Zahnrad 25 zwischen seinem Radkörper bzw. seiner Stimradverzahnung und seiner Kupplungsverzahnung einen bestimmten Freiraum auf, so dass das Zwischenrad 24a optimal dimensioniert werden kann. Weiterhin sind die Antriebs-Zahnräder 19, 20 und 23 so ausgeführt, dass diese unterschiedliche Zähnezahlen aufweisen.

Weitere Komponenten des Doppelkupplungsgetriebes 1 sind hier nicht dargestellt, beispielweise Hydraulikleitungen oder ein Getriebesteuergerät, dass die entsprechende Synchronislereinrichtungen S1 bis S5 steuert. Das hier dargestellte Doppelkupplungsgetriebe 1 wird vorzugsweise als automatisiertes Schaltgetriebe eingesetzt. Hierbei werden für die hydraulische Steuerung des Doppelkupplungsgetriebes 1 vzw. zwei separate hydraulische Steuerkreisläufe jeweils für die Synchroneinnchtungen S1 und S3 bzw. für S2, S4 und S5 gebildet. Insbesondere durch die Abstimmung der Zahnräder, Triebwellen und Eingangswellen und die Positionierung der einzelnen Zahnräder auf den Wellen und die Positionierung der Wellen zueinander, was in Fig. 2 gut dargestellt ist, ist ein sehr axial kompakt bauendes Doppelkupplungsgetriebe 1 geschaffen, was die eingangs beschriebenen Nachteile vermeidet und entsprechende Vorteile erzielt.

### Bezugszeichenliste

- 1: Doppelkupplungsgetriebe
- 2: erste Eingangswelle
- 3: zweite Eingangswelle
- 4, TW1: erste Triebwelle
- 5, TW2: zweite Triebwelle
- 6: Zahnräder
- 7: Zahnrad
- 8: Zahnrad
- 9: Zahnrad
- 10: Zahnrad
- 11: Zahnrad
- 12: Zahnrad
- 13: Zahnrad
- 14: Zahnrad
- 15: Zahnrad
- 16: Zahnrad
- 17: Zahnrad
- 18: Zahnrad
- 19: Antriebs-Zahnrad
- 20: Antriebs-Zahnrad
- 21: Achsantrieb
- 21a: Achsantrieb
- 22, TW3: dritte Triebwelle
- 23: Antriebs-Zahnrad
- 24: Zwischenrad
- 24a: Übersetzungsstufe
- 24b: Übersetzungsstufe
- 25: Zahnrad
- 26: Parksperrrad

- K1: erste Kupplung
- K2: zweite Kupplung
- RG: Rückwärtsgang
- S1: Synchroneinrichtung
- S2: Synchroneinrichtung
- S3: Synchroneinrichtung
- S4: Synchroneinrichtung
- S5: Synchroneinrichtung
- P: Parksperre

## Patentansprüche

1. Doppelkupplungsgetriebe (1) für ein Kraftfahrzeug, wobei das Doppelkupplungsgetriebe (1) zwei Eingangswellen (2, 3), zwei Kupplungen (K1, K2) und mindestens eine erste und eine zweite Triebwelle (4, 5) aufweist, wobei die erste Eingangswelle (2) mit der ersten Kupplung (K1) und die zweite Eingangswelle (3) mit der zweiten Kupplung (K2) wirksam verbindbar ist, wobei die erste Triebwelle (4) unterhalb und die zweite Triebwelle (5) oberhalb der Eingangswellen (2, 3) - oder umgekehrt - angeordnet sind, wobei die Eingangswellen (2, 3) und Triebwellen (4, 5) miteinander in Eingriff stehende Zahnräder aufweisen und zumindest zwei Zahnräder (6 bis 18) eine Gangstufe bilden, wobei durch die entsprechenden Zahnräder (6 bis 18) die erste bis sechste Gangstufe gebildet wird, wobei ein Zahnrad einer Gangstufe als ein- und auskuppelbares Losrad und das andere Zahnrad als Festrad ausgebildet ist, wobei jede Triebwelle (4, 5) ein Antriebs-Zahnrad (19, 20) zur Übertragung von Drehkraft auf den Achsantrieb (21) aufweist, und wobei zur Realisierung eines Rückwärtsganges (RG) eine weitere Welle vorgesehen ist, wobei die weitere Welle als dritte Triebwelle (22) ausgebildet ist, wobei die dritte Triebwelle (22) ein Antriebs-Zahnrad (23) zur Übertragung von Drehkraft auf den Achsantrieb (21) aufweist, wobei die Antriebs-Zahnräder (19, 20, 23) der Triebwellen (4, 5, 22) mit einem Achsantriebsrad (21a) des Achsantriebes (21) in Eingriff stehen, **dadurch gekennzeichnet, dass** auf der zweiten Triebwelle (5) ein Zwischenrad (24) für die Realisierung des Rückwärtsganges (RG) angeordnet ist, dass das Zwischenrad (24) stufenartig ausgebildet ist und zwei unterschiedliche Übersetzungsstufen (24a, 24b) aufweist, dass auf der zweiten Eingangswelle (3) zusätzlich ein Zahnrad (17) für eine siebte Gangstufe angeordnet ist und dass das Zahnrad (8) für die zweite Gangstufe der ersten Eingangswelle (2) zur Realisierung des Rückwärtsganges (RG) auch mit dem Zwischenrad (24) der zweiten Triebwelle (5) in Eingriff steht.

2. Doppelkupplungsgetriebe nach Anspruch 1, **dadurch gekennzeichnet, dass** die erste Eingangswelle (2) als Hohlwelle und die zweite Eingangswelle (3) als in der Hohlwelle angeordnete Vollwelle ausgeführt ist.

3. Doppelkupplungsgetriebe nach Anspruch 1 oder 2, **dadurch gekennzeichnet, dass** auf der ersten Eingangswelle (2) Zahnräder (8, 12) für die zweite, vierte und sechste Gangstufe angeordnet sind.

4. Doppelkupplungsgetriebe nach einem der vorstehenden Ansprüche, **dadurch gekennzeichnet, dass** auf der ersten Eingangswelle (2) für die vierte und sechste Gangstufe nur ein Zahnrad (12) angeordnet ist.

5. Doppelkupplungsgetriebe nach einem der vorstehenden Ansprüche, **dadurch gekennzeichnet, dass** die Zahnräder (8, 12) der ersten Eingangswelle (2) als Festräder ausgebildet sind.

6. Doppelkupplungsgetriebe nach einem der vorstehenden Ansprüche, **dadurch gekennzeichnet, dass** auf der zweiten Eingangswelle (3) Zahnräder (6, 10. 14) für die erste, dritte und fünfte Gangstufe angeordnet sind.

7. Doppelkupplungsgetriebe nach einem der vorstehenden Ansprüche, **dadurch gekennzeichnet, daß** die Zahnräder (6, 10, 14, 17) der zweiten Eingangswelle (3) als Festräder ausgebildet sind.

8. Doppelkupplungsgetriebe nach einem der vorstehenden Ansprüche, **dadurch gekennzeichnet, dass** auf der ersten Triebwelle (4) die Zahnräder (7, 9, 11, 13) für die erste, zweite, dritte und vierte Gangstufe angeordnet sind.

9. Doppelkupplungsgetriebe nach einem der vorstehenden Ansprüche, **dadurch gekennzeichnet, dass** die Zahnräder (7, 9, 11, 13) der ersten Triebwelle (4) als Losräder ausgebildet sind.

10. Doppelkupplungsgetriebe nach einem der vorstehenden Ansprüche, **dadurch gekennzeichnet, daß** auf der zweiten Triebwelle (5) die Zahnräder (15, 16, 18) für die fünfte, sechste und siebte Gangstufe angeordnet sind.

11. Doppelkupplungsgetriebe nach einem der vorstehenden Ansprüche, **dadurch gekennzeichnet, daß** die Zahnräder (15, 16, 18) der zweiten Triebwelle (5) als Losräder ausgebildet sind.

12. Doppelkupplungsgetriebe nach Anspruch 1, **dadurch gekennzeichnet, dass** das Zwischenrad (24) als Losrad ausgebildet ist.

13. Doppelkupplungsgetriebe nach einem der vorstehenden Ansprüche, **dadurch gekennzeichnet, dass** auf der dritten Triebwelle (22) das Zahnrad (25) für den Rückwärtsgang (RG) und / oder ein Parksperrrad (26) angeordnet ist bzw. sind.

14. Doppelkupplungsgetriebe nach Anspruch 13, **dadurch gekennzeichnet, dass** das Zahnrad (25) für den Rückwärtsgang (RG) als Losrad ausgebildet ist.

15. Doppelkupplungsgetriebe nach einem der vorstehenden Ansprüche, **dadurch gekennzeichnet, dass** mehrere Synchroneinrichtungen (S1, S2, S3, S4, S5) zum Ein-und/oder Auskuppeln der als Losräder ausgebildeten Zahnräder vorgesehen sind.

16. Doppelkupplungsgetriebe nach Anspruch 15, **dadurch gekennzeichnet, dass** die erste Synchroneinrichtung (S1) zwischen den Zahnrädern (7, 11) der ersten und dritten Gangstufe der ersten Triebwelle (4) angeordnet ist

17. Doppelkupplungsgetriebe nach einem der Ansprüche 15 oder 16, **dadurch gekennzeichet, dass** die zweite Synchroneinrichtung (S2) zwischen den Zahnrädern (9, 13) der zweiten und vierten Gangstufe der ersten Triebwelle (4) angeordnet ist

18. Doppelkupplungsgetriebe nach einem der Ansprüche 15 bis 17, **dadurch gekennzeichnet, dass** die dritte Synchroneinrichtung (S3) zwischen den Zahnrädern (15, 18) der fünften und siebten Gangstufe der zweiten Triebwelle (5) angeordnet ist.

19. Doppelkupplungsgetriebe nach einem der Ansprüche 15 bis 18, **dadurch gekennzeichnet, dass** die vierte Synchroneinrichtung (S4) im Bereich des Zahnrades (16) der sechsten Gangstufe der zweiten Triebwelle (5) angeordnet ist.

20. Doppelkupplungsgetriebe nach einem der Ansprüche 15 bis 19, **dadurch gekennzeichnet, dass** die fünfte Synchroneinrichtung (S5) im Bereich des Zahnrades (25) für den Rückwärtsgang (RG) auf der dritten Triebwelle (22) angeordnet ist.

21. Doppelkupplungsgetriebe nach einem der Ansprüche 15 bis 20, **dadurch gekennzeichnet, dass** die vierte und die fünfte Synchroneinrichtung (S4, S5) gegenläufig angeordnet sind, so dass diese mit einer gemeinsamen Betätigung schaltbar sind.

22. Doppelkupplungsgetriebe nach einem der Ansprüche 15 bis 21, **dadurch gekennzeichnet, dass** die Achsabstände der ersten bzw. zweiten Eingangswelle (2, 3) zu den ersten bzw. zweiten Triebwellen (4, 5) so dimensioniert sind, dass die als Schiebemuffe ausgeführte Synchroneinrichtung (S2) zum Einlegen der zweiten bzw. vierten Gangstufe bei eingelegter zweiter Gangstufe unter die Stimradverzahnung des Zahnrades (9) der zweiten Gangstufe eintauchen kann.

23. Doppelkupplungsgetriebe nach einem der Ansprüche 15 bis 22, **dadurch gekennzeichnet, dass** die Achsabstände der ersten bzw. zweiten Eingangswelle (2, 3) zu der ersten und zweiten Triebwelle (4, 5) so dimensioniert sind, dass die als Schiebemuffe ausgeführte Synchroneinrichtung (S4) für die sechste Gangstufe bei eingelegtem Rückwärtsgang unter die Stimradverzahnung des Zwischenrades (24a) für den Rückwärtsgang eintauchen kann.

24. Doppelkupplungsgetriebe nach einem der vorstehenden Ansprüche, **dadurch gekennzeichnet, dass** das als Losrad ausgebildete Zahnrad (25), das auf der dritten Triebwelle (22) angeordnet ist, zwischen seinem Radkörper seiner Stimradverzaihnung und seiner Kupplungsverzahnung einen Freiraum aufweist, so dass das Zwischenrad (24a) entsprechend dimensionierbar ist.

25. Doppelkupplungsgetriebe nach einem der vorstehenden Ansprüche, **dadurch gekennzeichnet, dass** die Antriebs-Zahnräder (19, 20 und 23) jeweils unterschiedliche Zähnezahlen aufweisen.

## Claims

1. Twin-clutch transmission (1) for a motor vehicle, the twin-clutch transmission (1) having two input shafts (2, 3), two clutches (K1, K2) and at least a first and a second driving shaft (4, 5), the first input shaft (2) being actively connectable to the first clutch (K1) and the second input shaft (3) being actively connectable to the second clutch (K2), the first driving shaft (4) being arranged below and the second driving shaft (5) above the input shafts (2, 3) (or vice versa), the input shafts (2, 3) and driving shafts (4, 5) having gearwheels in mesh with one another, and at least two gearwheels (6 to 18) forming a gear step, the first to sixth gear step being formed by the corresponding gearwheels (6 to 18), one gearwheel of a gear step being designed as an engageable and disengageable loose wheel and the other gearwheel being designed as a fixed wheel, each driving shaft (4, 5) having a driving gearwheel (19, 20) for transmitting torque to the axle drive (21), and a further shaft being provided for realizing a reverse gear (RG), the further shaft being designed as a third driving shaft (22), the third driving shaft (22) having a driving gearwheel (23) for transmitting torque to the axle drive (21), the driving gearwheels (19, 20, 23) of the driving shafts (4, 5, 22) meshing with an axle driving wheel (21a) of the axle drive (21), **characterized in that** an intermediate wheel (24) for realizing the reverse gear (RG) is arranged on the second driving shaft (5), **in that** the intermediate wheel (24) is of step-like design and has two different transmission steps (24a, 24b), **in that** a gearwheel (17) for a seventh gear step is additionally arranged on the second input shaft (3), and **in that** the gearwheel (8) for the second gear step of the first input shaft (2) is for realizing the reverse gear (RG) also in mesh with the intermediate wheel (24) of the second driving shaft (5).

2. Twin-clutch transmission according to Claim 1, **characterized in that** the first input shaft (2) is embodied as a hollow shaft and the second input shaft (3) is embodied as a solid shaft arranged in the hollow shaft.

3. Twin-clutch transmission according to Claim 1 or 2, **characterized in that** gearwheels (8, 12) for the second, fourth and sixth gear steps are arranged on the first input shaft (2).

4. Twin-clutch transmission according to one of the preceding claims, **characterized in that** only one gearwheel (12) is arranged on the first input shaft (2) for the fourth and sixth gear steps.

5. Twin-clutch transmission according to one of the preceding claims, **characterized in that** the gearwheels (8, 12) of the first input shaft (2) are designed as fixed wheels.

6. Twin-clutch transmission according to one of the preceding claims, **characterized in that** gearwheels (6, 10, 14) for the first, third and fifth gear steps are arranged on the second input shaft (3).

7. Twin-clutch transmission according to one of the preceding claims, **characterized in that** the gearwheels (6, 10, 14, 17) of the second input shaft (3) are designed as fixed wheels.

8. Twin-clutch transmission according to one of the preceding claims, **characterized in that** the gearwheels (7, 9, 11, 13) for the first, second, third and fourth gear steps are arranged on the first driving shaft (4).

9. Twin-clutch transmission according to one of the preceding claims, **characterized in that** the gearwheels (7, 9, 11, 13) of the first driving shaft (4) are designed as loose wheels.

10. Twin-clutch transmission according to one of the preceding claims, **characterized in that** the gearwheels (15, 16, 18) for the fifth, sixth and seventh gear steps are arranged on the second driving shaft (5).

11. Twin-clutch transmission according to one of the preceding claims, **characterized in that** the gearwheels (15, 16, 18) of the second driving shaft (5) are designed as loose wheels.

12. Twin-clutch transmission according to Claim 1, **characterized in that** the intermediate wheel (24) is designed as a loose wheel.

13. Twin-clutch transmission according to one of the preceding claims, **characterized in that** the gearwheel (25) for the reverse gear (RG) and/or a parking brake wheel (26) are/is arranged on the third driving shaft (22).

14. Twin-clutch transmission according to Claim 13, **characterized in that** the gearwheel (25) for the reverse gear (RG) is designed as a loose wheel.

15. Twin-clutch transmission according to one of the preceding claims, **characterized in that** a number of synchronizing devices (S1, S2, S3, S4, S5) are provided for engaging and/or disengaging the gearwheels designed as loose wheels.

16. Twin-clutch transmission according to Claim 15, **characterized in that** the first synchronizing device (S1) is arranged between the gearwheels (7, 11) of the first and third gear steps of the first driving shaft (4).

17. Twin-clutch transmission according to one of Claims 15 or 16, **characterized in that** the second synchronizing device (S2) is arranged between the gearwheels (9, 13) of the second and fourth gear steps of the first driving shaft (4).

18. Twin-clutch transmission according to one of Claims 15 to 17, **characterized in that** the third synchronizing device (S3) is arranged between the gearwheels (15, 18) of the fifth and seventh gear steps of the second driving shaft (5).

19. Twin-clutch transmission according to one of Claims 15 to 18, **characterized in that** the fourth synchronizing device (S4) is arranged in the region of the gearwheel (16) of the sixth gear step of the second driving shaft (5).

20. Twin-clutch transmission according to one of Claims 15 to 19, **characterized in that** the fifth synchronizing device (S5) is arranged in the region of the gearwheel (25) for the reverse gear (RG) on the third driving shaft (22).

21. Twin-clutch transmission according to one of Claims 15 to 20, **characterized in that** the fourth and the fifth synchronizing devices (S4, S5) are arranged to move in opposite directions, so that they can be operated by common actuation.

22. Twin-clutch transmission according to one of Claims 15 to 21, **characterized in that** the center distances of the first or second input shaft (2, 3) from the first and second driving shafts (4, 5) are dimensioned in such a way that the synchronizing device (S2) for engaging the second or fourth gear step embodied as a sliding sleeve can be inserted under the spur gear toothing of the gearwheel (9) of the second gear step when the second gear step has been engaged.

23. Twin-clutch transmission according to one of Claims 15 to 22, **characterized in that** the center distances of the first or second input shaft (2, 3) from the first and second driving shafts (4, 5) are dimensioned in such a way that the synchronizing device (S4) for the sixth gear step embodied as a sliding sleeve can be inserted under the spur gear toothing of the intermediate wheel (24a) for the reverse gear when the reverse gear has been engaged.

24. Twin-clutch transmission according to one of the preceding claims, **characterized in that** the gearwheel (25) designed as a loose wheel which is arranged on the third driving shaft (22) has a clearance between its wheel body/its spur gear toothing and its coupling toothing, so that the intermediate wheel (24a) can be dimensioned appropriately.

25. Twin-clutch transmission according to one of the preceding claims, **characterized in that** the driving gearwheels (19, 20 and 23) each have different numbers of teeth.

## Revendications

1. Transmission à double embrayage (1) pour un véhicule automobile, dans laquelle la transmission à double embrayage (1) présente deux arbres d'entrée (2, 3), deux embrayages (K1, K2), et au moins un premier et un deuxième arbre propulseur (4, 5), le premier arbre d'entrée (2) pouvant être connecté activement au premier embrayage (K1) et le deuxième arbre d'entrée (3) pouvant être connecté activement au deuxième embrayage (K2), le premier arbre propulseur (4) étant disposé en dessous, et le deuxième arbre propulseur (5) étant disposé au-dessus des arbres d'entrée (2, 3), ou inversement, les arbres d'entrée (2, 3) et les arbres propulseurs (4, 5) présentant des roues dentées en prise mutuelle et au moins deux roues dentées (6 à 18) formant un rapport de vitesse, le premier au sixième rapport de vitesse étant formés par les roues dentées correspondantes (6 à 18), une roue dentée d'un rapport de vitesse étant réalisée sous forme de roue libre embrayable et débrayable et l'autre roue dentée étant réalisée sous forme de roue fixe, chaque arbre propulseur (4, 5) présentant une roue dentée d'entraînement (19, 20) pour le transfert de la force de rotation à l'entraînement d'essieu (21), et pour réaliser une vitesse de marche arrière (RG), un arbre supplémentaire étant prévu, l'arbre supplémentaire étant réalisé sous forme de troisième arbre propulseur (22), le troisième arbre propulseur (22) présentant une roue dentée d'entraînement (23) pour le transfert de la force de rotation à l'entraînement d'essieu (21), les roues dentées d'entraînement (19, 20, 23) des arbres propulseurs (4, 5, 22) étant en prise avec une roue d'entraînement d'essieu (21a) de l'entraînement d'essieu (21), **caractérisée en ce que** sur le deuxième arbre propulseur (5) est disposée une roue intermédiaire (24) pour la réalisation de la vitesse de marche arrière (RG), **en ce que** la roue intermédiaire (24) est réalisée sous forme étagée et présente deux rapports de multiplication différents (24a, 24b), **en ce que** sur le deuxième arbre d'entrée (3) est en outre disposée une roue dentée (17) pour un septième rapport de vitesse, et **en ce que** la roue dentée (8) pour le deuxième rapport de vitesse du premier arbre d'entrée (2), pour réaliser la vitesse de marche arrière (RG), est également en prise avec la roue intermédiaire (24) du deuxième arbre propulseur (5).

2. Transmission à double embrayage selon la revendication 1, **caractérisée en ce que** le premier arbre d'entrée (2) est réalisé sous forme d'arbre creux et le deuxième arbre d'entrée (3) est réalisé sous forme d'arbre plein disposé à l'intérieur de l'arbre creux.

3. Transmission à double embrayage selon la revendication 1 ou 2, **caractérisée en ce que**, sur le premier arbre d'entrée (2) sont disposées des roues dentées (8, 12) pour les deuxième, quatrième et sixième rapports de vitesse.

4. Transmission à double embrayage selon l'une quelconque des revendications précédentes, **caractérisée en ce que** seulement une roue dentée (12) est disposée sur le premier arbre d'entrée (2) pour les quatrième et sixième rapports de vitesse.

5. Transmission à double embrayage selon l'une quelconque des revendications précédentes, **caractérisée en ce que** les roues dentées (8, 12) du premier arbre d'entrée (2) sont réalisées sous forme de roues fixes.

6. Transmission à double embrayage selon l'une quelconque des revendications précédentes, **caractérisée en ce que**, sur le deuxième arbre d'entrée (3) sont disposées des roues dentées (6, 10, 14) pour les premier, troisième et cinquième rapports de vitesse.

7. Transmission à double embrayage selon l'une quelconque des revendications précédentes, **caractérisée en ce que** les roues dentées (6, 10, 14, 17) du deuxième arbre d'entrée (3) sont réalisées sous forme de roues fixes.

8. Transmission à double embrayage selon l'une quelconque des revendications précédentes, **caractérisée en ce que**, sur le premier arbre propulseur (4) sont disposées les roues dentées (7, 9, 11, 13) pour les premier, deuxième, troisième et quatrième rapports de vitesse.

9. Transmission à double embrayage selon l'une quelconque des revendications précédentes, **caractérisée en ce que** les roues dentées (7, 9, 11, 13) du premier arbre propulseur (4) sont réalisées sous forme de roues libres.

10. Transmission à double embrayage selon l'une quelconque des revendications précédentes, **caractérisée en ce que**, sur le deuxième arbre propulseur (5) sont disposées les roues dentées (15, 16, 18) pour les cinquième, sixième et septième rapports de vitesse.

11. Transmission à double embrayage selon l'une quelconque des revendications précédentes, **caractérisée en ce que** les roues dentées (15, 16, 18) du deuxième arbre propulseur (5) sont réalisées sous forme de roues libres.

12. Transmission à double embrayage selon la revendication 1, **caractérisée en ce que** la roue intermédiaire (24) est réalisée sous forme de roue libre.

13. Transmission à double embrayage selon l'une quelconque des revendications précédentes, **caractérisée en ce que** sur le troisième arbre propulseur (22), est disposée ou sont disposées la roue dentée (25) pour la vitesse de marche arrière (RG) et/ou une roue de verrouillage de stationnement (26).

14. Transmission à double embrayage selon la revendication 13, **caractérisée en ce que** la roue dentée (25) pour la vitesse de marche arrière (RG) est réalisée sous forme de roue libre.

15. Transmission à double embrayage selon l'une quelconque des revendications précédentes, **caractérisée en ce que** plusieurs dispositifs de synchronisation (S1, S2, S3, S4, S5) sont prévus pour l'embrayage et/ou le débrayage des roues dentées réalisées sous forme de roues libres.

16. Transmission à double embrayage selon la revendication 15, **caractérisée en ce que** le premier dispositif de synchronisation (S1) est disposé entre les roues dentées (7, 11) du premier et du troisième rapport de vitesse du premier arbre propulseur (4).

17. Transmission à double embrayage selon l'une quelconque des revendications 15 ou 16, **caractérisée en ce que** le deuxième dispositif de synchronisation (S2) est disposé entre les roues dentées (9, 13) du deuxième et du quatrième rapport de vitesse du premier arbre propulseur (4).

18. Transmission à double embrayage selon l'une quelconque des revendications 15 à 17, **caractérisée en ce que** le troisième dispositif de synchronisation (S3) est disposé entre les roues dentées (15, 18) du cinquième et du septième rapport de vitesse du deuxième arbre propulseur (5).

19. Transmission à double embrayage selon l'une quelconque des revendications 15 à 18, **caractérisée en ce que** le quatrième dispositif de synchronisation (S4) est disposé dans la région de la roue dentée (16) du sixième rapport de vitesse du deuxième arbre propulseur (5).

20. Transmission à double embrayage selon l'une quelconque des revendications 15 à 19, **caractérisée en ce que** le cinquième dispositif de synchronisation (S5) est disposé dans la région de la roue dentée (25) pour la vitesse de marche arrière (RG) sur le troisième arbre propulseur (22).

21. Transmission à double embrayage selon l'une quelconque des revendications 15 à 20, **caractérisée en ce que** le quatrième et le cinquième dispositif de synchronisation (S4, S5) sont disposés en sens inverse, de sorte qu'ils puissent être commutés avec une commande commune.

22. Transmission à double embrayage selon l'une quelconque des revendications 15 à 21, **caractérisée en ce que** les entraxes entre le premier ou le deuxième arbre d'entrée (2, 3) par rapport au premier ou au deuxième arbre propulseur (4, 5) sont dimensionnés de telle sorte que le dispositif de synchronisation (S2) réalisé sous forme de manchon coulissant pour l'enclenchement du deuxième ou du quatrième rapport de vitesse lorsque le deuxième rapport de vitesse est enclenché puisse plonger sous la denture de pignon de la roue dentée (9) du deuxième rapport de vitesse.

23. Transmission à double embrayage selon l'une quelconque des revendications 15 à 22, **caractérisée en ce que** les entraxes entre le premier ou le deuxième arbre d'entrée (2, 3) par rapport aux premier et deuxième arbres propulseurs (4, 5) sont dimensionnés de telle sorte que le dispositif de synchronisation (S4) réalisé sous forme de manchon coulissant pour le sixième rapport de vitesse lorsque la vitesse de marche arrière est enclenchée puisse plonger sous la denture de pignon de la roue intermédiaire (24a) pour la vitesse de marche arrière.

24. Transmission à double embrayage selon l'une quelconque des revendications précédentes, **caractérisée en ce que** la roue dentée (25) réalisée sous forme de roue libre, qui est disposée sur le troisième arbre propulseur (22), présente entre son corps de roue de sa denture de pignon et sa denture d'embrayage un espace libre, de sorte que la roue intermédiaire (24a) puisse être dimensionnée de manière correspondante.

25. Transmission à double embrayage selon l'une quelconque des revendications précédentes, **caractérisée en ce que** les roues dentées d'entraînement (19, 20 et 23) présentent à chaque fois des nombres de dents différents.
